# EUROPÄISCHE PATENTSCHRIFT

(11) **EP 1 353 987 B1**
(45) Veröffentlichungstag und Bekanntmachung des Hinweises auf die Patenterteilung: **16.07.2008**
(21) Anmeldenummer: 02732119.9
(22) Anmeldetag: 04.01.2002
(51) Int. Cl.: C08K 5/098, C08F 279/02, C08L 51/04

(54) **KAUTSCHUKMISCHUNGEN FÜR WALZENBELÄGE**
RUBBER MIXTURES FOR ROLLER LININGS
MELANGES DE CAOUTCHOUC POUR REVETEMENTS DE ROULEAUX

(30) Priorität: 17.01.2001 DE 10102047
(43) Veröffentlichungstag der Anmeldung: 22.10.2003
(73) Patentinhaber: LANXESS Deutschland GmbH, 51369 Leverkusen (DE)
(72) Erfinder: FUCHS, Erich, 56818 Klotten (DE)
(86) Internationale Anmeldenummer: PCT/EP2002/000027
(87) Internationale Veröffentlichungsnummer: WO 2002/057350

(56) Entgegenhaltungen:
- US-A- 4 897 440
- US-A- 5 584 771
- US-A- 5 859 155
- US-A- 6 087 453
- US-A- 6 093 767
- BANDYOPADHYAY S ET AL: "INTERACTION BETWEEN CARBOXYLATED NITRILE RUBBER AND PRECIPITATED SILICA: ROLE OF (3-AMINOPROPYL)TRIETHYOXYSILANE" RUBBER CHEMISTRY AND TECHNOLOGY, RUBBER DIVISION ACS. AKRON, US, Bd. 69, Nr. 4, 1. September 1996 (1996-09-01), Seiten 637-647, XP000643469 ISSN: 0035-9475

## Beschreibung

Die Erfindung betrifft eine Kautschukmischung enthaltend einen carboxylierten Nitrilkautschuk, ein Metallsalz eines Acrylates, ein flüssiges Acrylat, ein Silan, sowie gegebenenfalls weitere Additive, ein Verfahren zu deren Herstellung und die Verwendung für Formkörper aller Art, insbesondere Walzenbeläge.

Walzen mit einem Kautschukbelag werden in vielen Bereichen eingesetzt, u.a. der Druck- und Textilindustrie, in Maschinen, wie z.B. Fax-Geräten und in der Stahl- und Papierindustrie.

Die ältere Anmeldung DE-A-199 42 743 offenbart eine Kautschukmischung enthaltend einen Nitrilkautschuk, ein Metallsalz eines Acrylates, ein flüssiges Acrylat, ein Silan, sowie gegebenenfalls weitere Additive, ein Verfahren zu deren Herstellung und die Verwendung für Formkörper aller Art, insbesondere Walzenbeläge. Jedoch wird ein carboxylierter Nitrilkautschuk nicht offenbart.

Besonders in der Stahl- und Papierindustrie sind die Walzenbeläge extremen Beanspruchungen ausgesetzt. Hierbei wird vor allem eine Kombination aus folgenden Eigenschaften von den Belägen gefordert:
- niedriger Druckverformungsrest
- niedriger Abrieb
- geringe Quellung in den verwendeten Medien
- gute Hitze- und chemische Beständigkeit
- exzellente Haftung Belag-Metalluntergrund
- geringer Wärmeaufbau bei Belastung.

**Aus** US-A-4,897,440sind für Walzen geeignete Zusammensetzuneen bekannt, die carboxylierten Nitrilkautschuk, ein Silan. Zinkoxid sowie weitere Additive wie Vulkanisationsbeschleuniger enthalten. Vulkanisate auf Basis dieser Zusammensetzungen weisen jedoch nur unzufriedenstellende Shore A Härten auf.

InUS-A-6,087,453 werden ferner Mischungen aus carboxyliertem Nitrilkautschuk und gegebenenfalls hydriertem Nitrilkautschuk, einem Metallsalz eines Acrylats und einem flüssigen Acrylat (Ethylenglykoldimethacrylat und Trimethylolpronantrimethacrylat) beschrieben. Die aus diesen Mischungen erhaltenen Vulkanisate werden als Dichtungen für Freone eingesetzt, da sie eine exzellente Niedrigtemperatur-Widerstandsfähigkeit und Widerstandsfähigkeit gegen die Freon-Gaspermeation besitzen sowie ferner eine hohe Beständigkeit gegenüber Oberflächenrissen des Vulkanisats, die infolge des Schäumens durch Freon auftreten. Die gesamte Lehre von US-A-6,087,453 ist auf diesen Anwendungsbereich der Dichtungen ausgerichtet. Andere Einsatzgebiete werden nirgends in US-A-6,087,453 genannt, insbesondere nicht der Einsatz der Vulkanisate als Walzenbelag. Demzufolge spielt auch die Eigenschaft der Härte und deren Güte keinerlei Rolle für die Kautschukmischungen und Vulkanisate aus US-A-6,087,453**.**

US-A-5,584,771 beschreibt vulkanisierbare Mischungen auf der Basis von hydrierten Nitrilkautschuken, die wie die Mischungen von US-A-6,087,453 ein Metallsalz eines Acrylats und mindestens ein flüssiges Acrylat enthalten. Die daraus hergestellten Vulkanisate werden als für Antriebsriemen geeignet beschrieben, US-A-5,584,771 fokussiert auf die Verbesserung der Haftung zwischen Reifenkord und dem Riemengrundkörper. Diese Verbesserung wird durch eine spezielle cashewmodifizierte Phenolharz-Schicht erreicht. Über die Härte der Vulkanisate auf Basis derartiger Mischungen wird nichts offenbart.

Wir haben nun gefunden, dass eine Nitrilkautschuk-enthaltende Kautschukmischung, die weiterhin ein Metallsalz eines Acrylates, ein flüssiges Acrylat und ein Silan enthält besonders geeignet ist als Ausgangsstoff für Kautschukbeläge von Walzen.

Gegenstand der Anmeldung ist somit eine Kautschukmischung, enthaltend
a) einen oder mehrere carboxylierte Nitrilkautschuke, wobei
   die Nitrilkautschuke Dien-(Meth-)Acrylnitril-Copolymerisate darstellen, die einen Gehalt an copolymerisierten Acrylnitril- und/oder Methacrylnitril-Einheiten von 5 bis 60 Gew.% aufweisen,
b) ein oder mehrere Metallsalze eines Acrylates
c) ein oder mehrere gegebenenfalls auf einen Träger aufgebrachte flüssige Acrylate,
d) im Bereich von 0,01 bis 10 phr eines oder mehrerer Silane, sowie
e) gegebenenfalls weitere Additive und/oder Füllstoffe.

Unter Nitrilkautschuken werden Dien-(Meth-)Acrylnitril-Copolymerisate verstanden. Isopren und insbesondere Butadien sind hierbei bevorzugte Diene. Die Copolymerisate besitzen einen Gehalt an copolymerisierten Acrylnitril- und/oder Methacrylnitril-einheiten von 5 bis 60, vorzugsweise 10 bis 50 Gew.-%.

Weiterhin werden ausdrücklich hydrierte Nitrilkautschuke unter dem Begriff subsummiert. Unter "hydriertem Nitrilkautschuk" oder "HNBR" sollen im Sinne dieser Erfindung Nitrilkautschuke, deren C=C-Doppelbindungen selektiv (d.h. ohne Hydrierung der C≡N-Dreifachbindung) teilweise oder vollkommen hydriert sind, verstanden werden. Bevorzugte hydrierte Nitrilkautschuke sind solche mit einem Hydriergrad, bezogen auf die vom Butadien stammenden C=C-Doppelbindungen, von mindestens 75, bevorzugt von mindestens 95, insbesondere von mindestens 98 %. Der Hydriergrad lässt sich NMR- und IR-spektroskopisch bestimmen.

Unter carboxylierten Nitrilkautschuken werden Nitrilkautschuke verstanden, welche Säure- (-COOH) oder Ester- (-COOR)-Seitengruppen tragen. Die Herstellung solcher carboxylierter Nitrilkautschuke ist beispielsweise in EP-A1-0 933 381 oder US-A-5,157,083 beschrieben. Besonders geeignet ist jedoch der in CA-2,304,501 beschriebene carboxylierte Nitrilkautschuk.

Die Hydrierung von Nitrilkautschuk ist bekannt; US-A 3 700 637, DE-A-2 539 132, DE-A-3 046 008, DE-A-3 046 251, DE-A-3 227 650, DE-A-3 329 974, EP-A-111 412, FR-B-2 540 503. Hydrierter Nitrilkautschuk zeichnet sich durch hohe Reißfestigkeit, geringen Abrieb, niedrig bleibende Verformung nach Druck- und Zugbeanspruchung und gute Ölbeständigkeit, vor allem aber durch bemerkenswerte Stabilität gegen thermische und oxidative Einflüsse aus. Daher werden hydrierte carboxylierte Nitrilkautschuke im Rahmen der Erfindung bevorzugt. Ganz besonders geeignet ist der in CA-2,304,501 beschriebene hydrierte, carboxylierte Nitrilkautschuk.

Weiterhin werden Mischungen in denen der carboxylierte Nitrilkautschuk ausgewählt ist aus der Gruppe carboxylierter NBR, teilhydrierter carboxylierter NBR und vollhydrierter carboxylierter NBR oder Gemische aus zwei oder mehr der Gruppenmitglieder bevorzugt.

Geeignete Nitrilkautschuke besitzen in der Regel Mooney-Viskositäten (DIN 53 523, ML 1+4) von 25 bis 100 ME, insbesondere 40 bis 80 ME.

Die Zugabe von Metallsalzen eines Acrylates zu Mischungen enthaltend Nitrilkautschuke ist bekannt. Geeignete Acrylate können unsubstituiert oder substituiert vorliegen. Beispiele für substituierte Acrylate sind Methacrylate.

Geeignete Acrylate sind dem Fachmann aus EP-A1-0 319 320, insbesondere S. 3, Z. 16 bis 35, aus US-A-5 208 294, insbesondere Spalte 2, Zeile 25 bis 40, aus US-A-4 983 678, insbesondere Spalte 2, Z. 45 bis 62, bekannt. Insbesondere werden hier genannt Zinkacrylat, Zinkdiacrylat und Zinkdimethacrylat.

Es kann vorteilhaft sein, das Metallsalz des Acrylates gemeinsam mit einem Scorchretarder einzusetzen. Hier kommen z.B. gehinderte Phenole, wie Methyl-substituierte Aminoalkylphenole, insbesondere 2,6-Di-tert.-butyl-4-dimethylaminomethylphenol in Betracht.

Als flüssiges Acrylat kommt jedes dem Fachmann bekannte bei Raumtemperatur in flüssiger Form vorliegende Acrylat in Frage.

Besonders bevorzugt sind Trimethylolpropantrimethacrylat (TRIM), Butandioldimethacrylat (BDMA) und Ethylenglykoldimethacrylat (EDMA).

Um eine bessere Einmischbarkeit zu erzielen kann es vorteilhaft sein, das flüssige Acrylat auf einem Träger gebunden einzusetzen. Als Träger kommen beispielsweise Silikate, gefällte Kieselsäuren, Tone, Ruß, Talkum oder Polymere in Frage. Im allgemeinen werden Gemische mit 5 bis 50 Gew.-% Träger eingesetzt.

Einsatz von Silanen als Verstärkungsadditive sind Stand der Technik. Für Peroxidvemetzung werden Vinylsilane, wie Vinyltrimethoxysilan oder Vinyl-tris(2-methoxyethoxy)silan eingesetzt. Diese Silane sind kommerziell erhältlich.

Die Silane werden in Mengen im Bereich von 0,01 bis 10 phr, bevorzugt im Bereich von 0,01 bis 8 phr, besonders bevorzugt von 1 bis 3 phr eingesetzt.

Unter phr werden Gewichtsteile pro 100 Gewichtsteile Kautschuk verstanden.

Es ist trivial, dass auch Mischungen verschiedener Silane eingesetzt werden können.

Es kann vorteilhaft sein, die gesamte Menge an Silan oder auch eine Teilmenge in auf einen Träger aufgebrachter Form einzusetzen.

Als Träger eignen sich hierbei sämtliche in dieser Erfindung offenbarte Füllstoffe, die gegebenenfalls vorbehandelt werden.

Als weitere Additive kommen beispielsweise die dem Fachmann bekannten Vulkanisationsaktivatoren, insbesondere Metalloxide, wie Zinkoxid oder Magnesiumoxid, Alterungsschutzmittel, wie alkyl-substituierte Diphenylamine, Mercaptobenzimidazole, ungesättigte Ether, wie Vulkazon^{®} AFD (Bayer AG, D) oder cyclische, ungesättigte Acetale, wie Vulkazon^{®} AFS/LG (Bayer AG, D) in Frage. Weiterhin werden als Additive genannt:
- Weichmacher, insbesondere Carbonsäureester, wie Sebazinsäure und deren Derivate oder Trimellithsäure und deren Derivate
- Verarbeitungshilfsmittel, insbesondere Stearinsäure und deren Derivate, wie Zinkstearat oder Polymere, wie Poly-ethylenvinylacetat (Levapren^{®} der Bayer AG, D) oder Poly-ethylenvinylacrylat /VAMAC^{®} der DuPont).

Weiterhin kann es vorteilhaft sein, Füllstoffe in die erfindungsgemäße Kautschukmischung einzubringen. Diese können unverstärkend oder verstärkend sein.

Als Füllstoffe seien beispielsweise genannt:
- Ruße, wie MT-, GPF-, SRF- und vor allem FEF-Ruße,
- Metalloxide, wie Titandioxid (vor allem als Weißpigment)
- Silikate, wie Natrium-Aluminium-Silikat
- Kieselsäuren, insbesondere gefällte Kieselsäuren
   Um den Abrieb zu verbessern, eignen sich bevorzugt sogenannte aktive Füllstoffe gemäß dem Vorschlag ISO 5794, Anhang D-Teil 1, z.B. veröffentlicht z.B. auf S. 535 des "Handbuch für die Gummiindustrie" der Bayer AG, 1992, Leverkusen.
- Tone, Glimmer, Talkum.

Weiterhin können Pigmente zugegeben werden.

Die Mengen der einzelnen Komponenten der Mischung richten sich nach dem Einsatzzweck der Mischung und lassen sich durch wenige Vorversuche ermitteln.

In der Regel werden die Stoffe in folgenden Mengen eingesetzt (jeweils in phr = per hundred parts of rubber):
- Metallsalz eines Acrylats 10 bis 120 phr, bevorzugt 10 bis 85 phr, insbesondere 20 bis 65 phr,
- flüssiges Acrylat 5 bis 80 phr, insbesondere 20 bis 60 phr, jeweils ohne Träger gerechnet,
- Alterungsschutzmittel 0 bis 4 phr,
- Retarder 0 bis 2 phr,
- Metalloxide, wie ZnO 0 bis 30 phr,
- Füllstoffe 0 bis 150 phr, bevorzugt aktive Füllstoffe,
- Silane 0,01 bis 10 phr,
- Weichmacher 0 bis 20 phr,
- Verarbeitungshilfsmittel 0 bis 2 phr.

Ein weiterer Gegenstand der Erfindung sind vernetzbare Mischungen enthaltend die erfindungsgemäßen Kautschukmischungen, sowie ein Verfahren zur Herstellung der erfindungsgemäßen Kautschukmischungen und vernetzbarer Kautschukmischungen, dadurch gekennzeichnet, dass man die Komponenten in einem Mischaggregat mischt.

Die Mischungsherstellung erfolgt vorteilhaft in einem Laborkneter (beispielsweise GK 1,5 E der Fa. Krupp Elastomertechnik, Hamburg) , Kühlwassertemperatur im Bereich von 10 bis 50°C, Schaufeldrehzahl im Bereich von 5 bis 70 UPM, Stempeldruck 6 bar, Kneterfüllgrad im Bereich von 50 bis 95 %, bezogen auf das Kammervolumen des Kneters.

Die Mischfolge ist vorteilhaft: Kautschuk vorlegen, nach 0,5 bis 5 min. Laufzeit restliche Bestandteile zugeben, Entleeren des Kneters bei einer Batchtemperatur von <130°C. Das Peroxid wird bevorzugt auf einem Walzwerk (Fa. Krupp, Elastomertechnik, Hamburg), Walzendurchmesser 200 mm, Arbeitsbreite 350 mm) bei 10 bis 50°C Kühlwassertemperatur nachgemischt.

Um vernetzbare Mischungen aus den erfindungsgemäßen Mischungen herzustellen werden den erfindungsgemäßen Kautschukmischungen Vernetzer zugegeben. Als Vernetzer eignen sich Peroxidsysteme und Kombinationen von Peroxidsystemen und Zinkperoxid (auf Träger oder polymergebunden, Wirkstoffgehalt 30 bis 50 %).

Bevorzugte Peroxidsysteme umfassen
Dialkylperoxide,
Ketalperoxide,
Aralkylperoxide,
Peroxidether,
Peroxidester, wie z.B.
Di-tert.-butylperoxid
Bis-(tert.-butylperoxyisopropyl)-benzol,
Dicumylperoxid,
2,5-Dimethyl-2,5-di(tert.-butylperoxy)-hexan,
2,5-Dimethyl-2,5-di(tert.-butylperoxy)-hexen-(3),
1,1-Bis-(tert.-butylperoxy)-3,3,5-trimethyl-cyclohexan,
Benzoylperoxid,
tert.-Butylcumylperoxid und
tert.-Butylperbenzoat.

Die Peroxidmengen liegen im Bereich von 1 bis 10 phr, vorzugsweise im Bereich von 4 bis 8 phr, bezogen auf Kautschuk. Die Zinkperoxidmengen liegen im Bereich 1 bis 10 phr, vorzugsweise im Bereich 4 bis 8 phr, bezogen auf Kautschuk. Kombinationen von Peroxid und Zinkperoxid ergeben allgemein höhere Vernetzung und Härte. Die Vernetzung kann bei Temperaturen von 100 bis 200°C, vorzugsweise 130 bis 180°C, gegebenenfalls unter einem Druck von 10 bis 200 bar, erfolgen. Im Anschluss an die Vernetzung können die Vulkanisate durch Lagerung bei höherer Temperatur getempert werden.

Die Peroxide können vorteilhaft auch in polymergebundener Form eingesetzt werden. Entsprechende Systeme sind kommerziell erhältlich, wie beispielsweise Polydispersion T(VC) D-40 P der Firma Rhein Chemie Rheinau GmbH, D (= polymergebundenes Di-tert.-Butylperoxy-isopropylbenzol).

Die Vernetzung kann auch durch energiereiche Strahlung erzielt werden.

Vernetzung im Sinne der Erfindung bedeutet, dass bei 10-stündiger Extraktion im Soxhlet-Aufsatz mit Toluol als Extraktionsmittel weniger als 10, vorzugsweise weniger als 5 Gew.-%, bezogen auf Kautschuk, extrahierbar ist.

Die optimale Menge an Vernetzer ist durch Vorversuche leicht zu ermitteln. Es ist hierbei bekannt, dass die Menge an notwendigem Peroxid indirekt proportional zum Rest-Doppelbindungsgehalt des Kautschuks ist.

Als Mischorgan kann jedes dem Fachmann bekannte Mischorgan für Kautschuke eingesetzt werden, insbesondere Kneter und Walzen.

Hierbei ist darauf zu achten, dass der Kautschuk während des Mischvorgangs nicht abgebaut wird. Es kann vorteilhaft sein, während des Mischvorgangs zu kühlen. Um Scorch zu vermeiden wird das Peroxid sowie Zinkperoxid häufig als letzte Komponente, gegebenenfalls in einem separaten Mischvorgang, zugegeben.

Ein weiterer Gegenstand der Erfindung ist die Verwendung der erfindungsgemäßen Kautschukmischungen zur Herstellung von Formkörpern aller Art, insbesondere Belägen für Walzen, ganz besonders Walzen für die Papier-, Textil-, Druck- und Stahlindustrie.

In der Regel bestehen Walzen aus einem Metallkern mit variablem Durchmesser. Der Metallkern besteht in der Regel aus Stahl verschiedener Zusammensetzung auf die die vernetzbare Kautschukmischung nach im Stand der Technik üblichen Verfahren aufgezogen und anschließend vernetzt wird. Hierbei ist eine gute Haftung Belag-Metall und innerhalb des Belages entscheidend. Es kann vorteilhaft sein, die Belag-Metallhaftung durch Haftvermittler wie Dispersionen/Lösungen halogenierter Polymere gegebenenfalls mit Vernetzern/Füllstoffen/Pigmenten zu verbessern. Diese Substanzen sind kommerziell erhältlich.

Die erfindungsgemäßen Kautschukmischungen sind für die Walzenanwendung besonders gut geeignet, da sie in vernetztem Zustand eine exzellente Härte und exzellente mechanische Eigenschaften im Bereich von über 20 Shore D nach DIN 53 506 selbst bei erhöhten Servicetemperaturen mit einer guten Resistenz gegen Abrieb, Hitze, Wasser und basische Chemikalien verbindet. Dieses ausgeglichene Eigenschaftsspektrum ist gemäß dem Stand der Technik nicht zu erreichen. Selbstverständlich eignen sich die erfindungsgemäßen Kautschukmischungen auch zur Herstellung anderer Formkörper, wie Profile, Riemen, Ringe, Dichtungen, Dämpfungselementen usw.

Aus diesem Grund sind Formkörper, insbesondere Walzen und Riemen, herstellbar unter Verwendung einer der erfindungsgemäßen Kautschukmischungen, ein weiterer Gegenstand der Erfindung.

Für den Fachmann ist es trivial, die erfindungsgemäßen Mischungen durch Zugabe weiterer Polymere, wie BR, NR, IIR, IR, EPDM, EPM, CR, SBR, AEM, ACM oder Fluorpolymeren, in ihren Eigenschaften exakt maßzuschneidern.

Folgende Beispiele dienen zur Erläuterung der Erfindung, ohne sie einschränken zu wollen.

### Beispiele

### Meßmethoden

| | |
|---|---|
| Rest-Doppelbindungsgehalt | IR-Spektroskopie |
| Mooney Viskosität | ASTM D 1646 (in ME angegeben) |
| (ML 1+4 (100°C)) | |
| Flüchtige Bestandteile (Gew.%) | ASTM D 1416 |
| Aschegehalt(Gew.%) | ASTM D 1416 |
| Acrylnitril (ACN)-Gehalt | nach folgender Vorschrift: |
| (Gew.% gebunden im Polymer) | |

### Kurzbeschreibung des Verfahrens zur ACN-Bestimmung

Bei der Analyse wird der Kautschuk im Sauerstoffstrom an einem Katalysator bei 900°C pyrolysiert. An einem Kupferreduktionsreaktor wird der nicht verbrauchte Sauerstoff absorbiert und die gebildeten NO-X Gase zu Stickstoff reduziert. Anschließend wird dem Analysengasstrom an einer Na₂CO₃/NaOH-Falle das enthaltende CO₂ und in einer MgClO₄-Falle das enthaltene Wasser entzogen. Die Änderung der Wärmeleitfähigkeit des Analysengases gegenüber dem Trägergasstrom ist ein Maß für den Stickstoffgehalt der Probe.

### Geräte für obiges Verfahren

- Proteinanalysator Fa. Fisons, Typ NA 2000
- Mikrowaage, Fa. Sartorius, Typ Micro
- Auswerteeinheit, Fa. Digital, Typ DECpc Lpx 433 dx mit Schnittstellen zum NA 2000 und Waageninterface, sowie der Software EAGER 200

### Chemikalien und Lösungsmittel für obiges Verfahren

Methionin Fa. Hekatech

### Rezepturbestandteile für die Erfindung

| | | |
|---|---|---|
| Therban^{®} Versuchsprodukt | | |
| KA 8837 | Bayer AG | 20 % RDB, 34 % ACN |
| | | 55 ME |
| Therban^{®} C 3446 | Bayer AG | HNBR mit 4 % RDB, |
| | | 34 % ACN, 58 ME |
| Therban XT Versuchsprodukt | Bayer AG | HNBR mit 3,5 % RDB, |
| KA 8889 | | 32 % ACN, 74 ME, |
| | | Carbonsäure 5 % |
| Zinkoxyd aktiv | Bayer AG | aktives Zinkoxid |
| Magnesiumoxidpaste | Treffert | Magnesiumoxid-Paste |
| | Rheinau GmbH | |
| Rhenofit DDA-70 | Rhein Chemie | Diphenylamin-Derivat |
| | Rheinau GmbH | |
| Vulkanox^{®} ZMB 2 | Bayer AG | Zinkmethyl- |
| | | merkaptobenzimidazol |
| Tronox^{®} R-UF | Mc Gee | Titandioxid, Rutil-Typ |
| Vulkasil^{®} S | Bayer AG | gefällte Kieselsäure |
| Sartomer SR633 | Sartomer | Zinkdiacrylat mit |
| | | Retarderzusatz |
| Sartomer SR634 | Sartomer | Zinkdimethacrylat mit |
| | | Retarderzusatz |
| Rhenofit^{®} TRIM/S | RheinChemie | Trimethylolpropantri- |
| | Rheinau GmbH | methacrylat 70 % / ge- |
| | | bunden an Kieselsäure |
| | | 30% |
| Ethanox 703 | Albemarle,BE | 2,6-ditert.-butyl-4-(dimethylamino)-phenol |
| Polydispersion T (VC) D-40 P | Rhein Chemie | Di(tert. Butyl-peroxy |
| | Rheinau GmbH | -isopropyl)-benzol, |
| | | polymergebunden |
| Zinkperoxid, 55 % | Riedel de Haan | Zinkperoxid (auf Füllstoff) |
| Silquest RC-1 | UCC | Vinylsilan |
| (Silan) | | |
| Armeen 18D | Flexys | Octadecylamin |

### Herstellung der Mischungen

Die Mischungsherstellung erfolgte in einem Laborkneter GK 1,5 E (Fa. Krupp Elastomertechnik, Hamburg), Kühlwassertemperatur 50°C, Schaufeldrehzahl 50 UPM, Stempeldruck 6 bar, Kneterfüllgrad 70-80 % bezogen auf das Kammervolumen des Kneters.

**Mischfolge:** Kautschuk vorlegen, nach 1 min. Laufzeit restliche Bestandteile zugeben, Entleeren des Kneters bei einer Batchtemperatur von <130°C. Das Peroxid wurde auf einem Walzwerk (Fa. Krupp Elastomertechnik, Walzendurchmesser 200 mm, Arbeitsbreite 350 mm) bei 40°C Kühlwassertemperatur nachgemischt.

Die Platten für die Bestimmung der mechanischen Eigenschaften wurden in einer Vulkanisierpresse (Fa. Krupp Elastomertechnik) zwischen Teflon-Folien unter den angegebenen Bedingungen vernetzt/vulkanisiert.

### Prüfung der Mischungen

| **Wert:** | | **Eigenschaften:** | **Prüfnorm:** |
|---|---|---|---|
| | Dimension | | |
| ML-1+4/100°C | ME | Viskosität nach Mooney | DIN 53523 Teil 3 |
| MS-T5/120°C, | min | Anvulkanisationsverhalten nach DIN 53523 Teil 4 | |
| | | Mooney | |
| | | (Zeit für 5 ME über Minimum ) | |
| MDR-Rheometer | | Vulkanisationsverlauf | DIN 53529 Teil 3 |
| Minimum, bzw. | S'dNm | Drehmoment-Minimum-Maximum, | |
| Maximum, bzw. | | bzw. Differenz Max./ Min. | |
| MAX-Min | | | |
| T10,T50,T80,T90 | min | Zeit für 10%, 50%, 80%, 90% | |
| | | Umsatz | |
| F | MPa | Zugfestigkeit | DIN 53504 |
| D | % | Bruchdehnung | DIN 53504 |
| S xxx | MPa | Spannungswert bei xxx% | DIN 53504 |
| | | Dehnung | |
| H | Shore A/D | Härte | DIN 53505 |
| E | % | Rückprall-Elastizität | DIN 53512 |

### Beispiel 1:

Die Mischungen 1a bis 1e wurden aus den in Tabelle 1 beschriebenen Einsatzstoffen wie im Abschnitt "Mischungsherstellung" beschrieben hergestellt und geprüft.

Die Prüfergebnisse sind in Tabelle 2 aufgeführt.

**Tabelle 1**

| Mischung | Mischung 1a | Mischung 1b | Mischung 1c | Mischung 1d | Mischung 1e |
|---|---|---|---|---|---|
| Therban C 3446 (a) | 100 | 75 | 50 | - | - |
| Therban XT KA 8889 | - | 25 | 50 | 100 | 100 |
| Vulkasil S | 30 | 30 | 30 | 30 | 30 |
| Vinylsilan (Silquest RC-1) | 2 | 2 | 2 | 2 | 2 |
| Tronox R-UF | 3 | 3 | 3 | 3 | 3 |
| Rhenofit DDA-70 | 1,3 | 1,3 | 1,3 | 1,3 | 1,3 |
| Vulkanox ZMB-2 | 0,5 | 0,5 | 0,5 | 0,5 | 0,5 |
| Rhenofit TRIM/S | 15 | 15 | 15 | 15 | 15 |
| Sartomer SR 633 | 15 | 15 | 15 | 15 | - |
| Sartomer SR 634 | - | - | - | - | 15 |
| Ethanox 703 | 1 | 1 | 1 | 1 | 1 |
| Zinkperoxid | 6 | 6 | 6 | 6 | 6 |
| Polydispersion T (VC) D-40 P | 6 | 6 | 6 | 6 | 6 |
| Armeen 18D | 3 | 3 | 3 | 3 | 3 |
| Gew.-Teile Gesamt | 179,8 | 179,8 | 179,8 | 179,8 | 179,8 |
| Dichte (g/cm) | 1,19 | 1,20 | 1,20 | 1,21 | 1,20 |

**Tabelle 2**

| Mischeigenschaften | Mischung 1a | Mischung 1b | Mischung 1c | Mischung 1d | Mischung 1e |
|---|---|---|---|---|---|
| MS-T5/120°C | >45 | >45 | >45 | >45 | >45 |

| MDR-Rheometer 160°C/Laufzeit 40 min | | | | | |
|---|---|---|---|---|---|
| Minimum (S'dNm) | 1,3 | 1,3 | 1,5 | 1,9 | 1,8 |
| Maximum | 65,7 | 74,8 | 73,8 | 52,9 | 55,8 |
| Max-Min | 64,4 | 73,5 | 72,2 | 51,0 | 54,1 |
| T 10 (min) | 3,1 | 3,2 | 3,1 | 3,6 | 3,7 |
| T 50 | 6,6 | 6,4 | 6,0 | 6,4 | 7,4 |
| T 80 | 15,2 | 14,3 | 13,0 | 12,7 | 17,0 |
| T 90 | 21,7 | 20,6 | 19,1 | 18,5 | 24,2 |

| MDR-Rheometer 180°C/Laufzeit 10 min | | | | | |
|---|---|---|---|---|---|
| Minimum (S'dNm) | 1,0 | 1,0 | 1,2 | 1,4 | 1,3 |
| Maximum | 61,7 | 69,9 | 62,6 | 41,3 | 35,3 |
| Max-Min | 60,7 | 68,9 | 61,4 | 39,9 | 33,9 |
| T 10 (min) | 0,7 | 0,7 | 0,7 | 0,7 | 0,8 |
| T 50 | 1,1 | 1,0 | 1,0 | 1,0 | 1,6 |
| T 80 | 2,4 | 2,2 | 2,0 | 1,9 | 3,5 |
| T 90 | 3,4 | 3,2 | 3,0 | 2,9 | 5,0 |

| Vulkanisation 30 min 160°C | | | | | |
|---|---|---|---|---|---|
| F (Mpa) | 23,4 | 25,5 | 25,3 | 36,2 | 35,6 |
| D (%) | 325 | 285 | 205 | 245 | 270 |
| S 50 (Mpa) | 4,5 | 8,3 | 10,8 | 9,1 | 9,2 |
| S 100 (Mpa) | 7,3 | 12,3 | 16,5 | 17,3 | 16,2 |
| H 23°C (Sh. A) | 90 | 94 | 93 | 92 | 92 |
| H 23°C (Sh. D) | 39 | 48 | 49 | 46 | 49 |
| E 23°C (%) | 45 | 44 | 40 | 34 | 34 |
| Ww. n. DIN 53 515 (N/mm) | 25 | 29 | 27 | 21 | 28 |

### Beispiel 2

Die Mischungen 2a bis 2e wurden aus den in Tabelle 3 beschriebenen Einsatzstoffen analog Beispiel 1 hergestellt und geprüft.

Die Ergebnisse sind in Tabelle 4 angegeben.

**Tabelle 3**

| Mischung | Mischung 2a | Mischung 2b | Mischung 2c | Mischung 2d | Mischung 2e |
|---|---|---|---|---|---|
| Therban KA 8837 | 100 | 100 | - | - | 50 |
| Therban XT KA 8889 | - | - | 100 | 100 | 50 |
| Zinkoxid Aktiv | 2 | 2 | - | - | - |
| MgO Paste | 2 | 2 | - | - | - |
| Vulkasil S | 50 | 50 | 50 | 50 | 50 |
| Vinylsilan (Silquest RC-1) | 2 | 2 | 2 | 2 | 2 |
| Tronox R-UF | 3 | 3 | 3 | 3 | 3 |
| Rhenofit DDA-70 | 1,3 | 1,3 | 1,3 | 1,3 | 1,3 |
| Vulkanox ZUB-2 | 0,5 | 0,5 | 0,5 | 0,5 | 0,5 |
| Rhenofit TRIM/S | 30 | 30 | 30 | 30 | 30 |
| Sartomer SR 633 | 30 | - | 30 | - | 30 |
| Sartomer SR 634 | - | 30 | - | 30 | - |
| Ethanox 703 | 1 | 1 | 1 | 1 | 1 |
| Zinkperoxid | - | - | 6 | 6 | 6 |
| Polydispersion T (VC) D-40 P | 6 | 6 | 6 | 6 | 6 |
| Armeen 18 D | 3 | 3 | 3 | 3 | 3 |
| Gew.-Teile Gesamt | 230,8 | 227,8 | 229,8 | 229,8 | 229,8 |
| Dichte (g/ccm) | 1,27 | 1,27 | 1,29 | 1,29 | 1,29 |

**Tabelle 4**

| Mischeigenschaften | Mischung 1a | Mischung 1b | Mischung 1c | Mischung 1d | Mischung 1e |
|---|---|---|---|---|---|
| MS-T5/120°C | >45 | >45 | >45 | >45 | >45 |

| MDR-Rheometer 160°C/Laufzeit 40 min | | | | | |
|---|---|---|---|---|---|
| Minimum (S'dNm) | 1,6 | 1,5 | 1,4 | 1,5 | 1,5 |
| Maximum | 233,4 | 177,0 | 206,4 | 177,2 | 224,5 |
| Max-Min | 231,7 | 175,5 | 205,0 | 175,7 | 223,0 |
| T 10 (min) | 3,0 | 3,6 | 3,7 | 4,2 | 3,5 |
| T 50 | 4,3 | 6,0 | 5,9 | 6,2 | 4,4 |
| T 80 | 7,8 | 13,8 | 10,5 | 11,9 | 6,3 |
| T 90 | 10,2 | 19,7 | 14,3 | 16,9 | 7,9 |

| MDR-Rheometer 180°C/Laufzeit 10 min | | | | | |
|---|---|---|---|---|---|
| Minimum (S'dNm) | 1,3 | 1,3 | 1,0 | 1,2 | 1,2 |
| Maximum | 232,9 | 176,2 | 170,1 | 139,6 | 229,4 |
| Max-Min | 231,5 | 174,9 | 169,1 | 138,5 | 228,2 |
| T 10 (min) | 0,6 | 0,7 | 0,7 | 0,9 | 0,7 |
| T 50 | 0,7 | 1,1 | 0,8 | 1,3 | 0,8 |
| T 80 | 0,9 | 2,5 | 1,3 | 2,6 | 0,9 |
| T 90 | 1,0 | 3,7 | 2,0 | 3,6 | 0,9 |

| Vulkanisation 30 min 160°C | | | | | |
|---|---|---|---|---|---|
| F (Mpa) | 16,2 | 16,7 | 24,8 | 29,7 | 25,1 |
| D (%) | 63 | 94 | 48 | 69 | 33 |
| S 20 (Mpa) | 11,2 | 9,7 | 18,5 | 21,6 | 24,0 |
| S 50 (Mpa) | 14,2 | 12,7 | 25,7 | 27,6 | - |
| S 100 (Mpa) | - | - | - | - | - |
| H 23°C (Sh. A) | 98 | 99 | 99 | 99 | 99 |
| H 23°C (Sh. D) | 64 | 60 | 68 | 68 | 70 |
| E 23°C (%) | 53 | 45 | 44 | 43 | 52 |
| Ww. n. DIN 53 515 (N/mm) | 35 | 33 | 28 | 35 | 37 |

Die in den Beispielen aufgeführten Kautschukmischungen zeigen die vorstehend genannten vorteilhaften Eigenschaften.

Durch Abmischen von carboxyliertem hydriertem Nitrilkautschuk mit hydriertem/teilhydriertem Nitrilkautschuk oder alleinige Verwendung dieses carboxylierten, hydrierten Nitrilkautschuks werden die mechanischen Eigenschaften (insbesondere die Zugfestigkeit) und die Härte weiter verbessert und machen diese Kautschukmischungen besonders geeignet für die angegebenen Anwendungen.

## Patentansprüche

1. Kautschukmischung, enthaltend
a) einen oder mehrere carboxylierte Nitrilkautschuke, wobei die Nitrilkautschuke Dien-(Meth-)Acrylnitril-Copoymerisate darstellen, die einen Gehalt an copolymerisierten Acrylnitril- und/oder Methacrylnitril-Einheiten von 5 bis 60 Gew.% aufweisen.
b) ein oder mehrere Metallsalze eines Acrylates
c) ein oder mehrere gegebenenfalls auf einen Träger aufgebrachte flüssige Acrylate,
d) im Bereich von 0,01 bis 10 phr eines oder mehrerer Silane, sowie
e) gegebenenfalls weitere Additive und/oder Füllstoffe

2. Kautschukmischung nach Anspruch 1, **dadurch gekennzeichnet, dass** der/die carboxylierten Nitrilkautschuke ausgewählt sind aus der Gruppe carboxylierter NBR, teilhydrierter carboxylierter NBR und vollhydrierter carboxylierter NBR oder Gemische aus zwei oder mehr der Gruppenmitglieder.

3. Kautschukmischung nach Anspruch 1 oder 2, **dadurch gekennzeichnet, dass** das Metallsalz des Acrylates ein Zn-diacrylat oder ein Zn-dimethacrylat oder ein Gemisch hieraus ist.

4. Kautschukmischung nach einem oder mehreren der Ansprüche 1 oder 3, **dadurch gekennzeichnet, dass** das flüssige Acrylat Butandioldimethacrylat oder Trimethylolpropantrimethacrylat oder ein Gemisch hieraus ist.

5. Kautschukmischung nach einem oder mehreren der Ansprüche 1 bis 4, **dadurch gekennzeichnet, dass** als Silan Vinylsilan eingesetzt wird.

6. Kautschukmischung nach einem oder mehreren der Ansprüche 1 bis 5, **dadurch gekennzeichnet, dass** die Mischung weiterhin einen silikatischen Füllstoff, Ruß, Zinkoxid, Magnesiumoxid oder ein Gemisch aus zwei oder mehr dieser Komponenten enthält.

7. Kautschukmischung nach einem oder mehreren der Ansprüche 1 bis 6, **dadurch gekennzeichnet, dass** die Mischung Vulkanisationsverzögerer und/oder Vulkanisationsbeschleuniger enthält.

8. Vernetzbare Kautschukmischung enthaltend eine Kautschukmischung gemäß einem oder mehreren der Ansprüche 1 bis 7.

9. Verfahren zur Herstellung einer Mischung gemäß einem oder mehreren der Ansprüche 1 bis 8, **dadurch gekennzeichnet, dass** man die Komponenten in einem Mischaggregat mischt.

10. Verfahren zur Vernetzung einer Mischung gemäß einem oder mehreren der Ansprüche 1 bis 9, **dadurch gekennzeichnet, dass** man als Vernetzer ein Peroxid (gegebenenfalls in Kombination mit Zinkperoxid) einsetzt.

11. Vernetzte Mischung erhältlich in einem Verfahren gemäß Anspruch 10.

12. Verwendung einer Kautschukmischung gemäß einem oder mehreren der Ansprüche 1 bis 8 oder 11 zur Herstellung von Formkörpern aller Art.

13. Verwendung nach Anspruch 12 zur Herstellung von Walzenbelägen.

14. Formkörper, herstellbar unter Verwendung einer Kautschukmischung gemäß einem oder mehreren der Ansprüche 1 bis 8 oder 11.

## Claims

1. Rubber mixture, comprising
a) one or more carboxylated nitrile rubbers, where the nitrile rubbers are diene-(meth)acrylonitrile copolymers which have from 5 to 60% by weight content of copolymerized units of acrylonitrile and/or of methacrylonitrile
b) one or more metal salts of an acrylate
c) one or more liquid acrylates, where appropriate applied to a support
d) from 0.01 to 10 phr of one or more silanes, and also
e) where appropriate, other additives and/or fillers

2. Rubber mixture according to Claim 1, **characterized in that** the carboxylated nitrile rubber(s) have been selected from the group of carboxylated NBR, partially hydrogenated carboxylated NBR, and fully hydrogenated carboxylated NBR, or of mixtures of two or more of the members of the group.

3. Rubber mixture according to Claim 1 or 2, **characterized in that** the metal salt of the acrylate is a Zn diacrylate or a Zn dimethacrylate, or a mixture of these.

4. Rubber mixture according to one or more of Claims 1 to 3, **characterized in that** the liquid acrylate is butanediol dimethacrylate or trimethylolpropane trimethacrylate or a mixture of these.

5. Rubber mixture according to one or more of Claims 1 to 4, **characterized in that** the silane used comprises vinyl silane.

6. Rubber mixture according to one or more of Claims 1 to 5, **characterized in that** the mixture also comprises a silicatic filler, carbon black, zinc oxide, magnesium oxide, or a mixture of two or more of these components.

7. Rubber mixture according to one or more of Claims 1 to 6, **characterized in that** the mixture comprises zulcanization retarders and/or vulcanization accelerators.

8. Crosslinkable rubber mixture comprising a rubber mixture according to one or more of Claims 1 to 7.

9. Process for preparing a mixture according to one or more of Claims 1 to 8, **characterized in that** the components are mixed in a mixing assembly.

10. Process for crosslinking a mixture according to one or more of Claims 1 to 9, **characterized in that** the crosslinker used comprises a peroxide (where appropriate combined with zinc peroxide).

11. Crosslinked mixture obtainable in a process according to Claim 10.

12. Use of a rubber mixture according to one or more of Claims 1 to 8 or 11 for the production of moldings of any type.

13. Use according to Claim 12 for the production of roller coverings.

14. Molding which can be produced using a rubber mixture according to one or more of Claims 1 to 8 or 11.

## Revendications

1. Mélange caoutchouc contenant :
a) un ou plusieurs caoutchoucs nitrile carboxylés, les caoutchoucs nitrile étant constitués de copolymères diène-(méth)acrylonitrile qui présentent une teneur en unités acrylonitrile et/ou méthacrylonitrile copolymérisées de 5 à 60 % en poids,
b) un ou plusieurs sel(s) métallique(s) d'un acrylate,
c) un ou plusieurs acrylate(s) liquide(s) éventuellement appliqué(s) sur un support,
d) dans une plage de 0,01 à 10 phr d'un ou de plusieurs silane(s), ainsi que
e) éventuellement d'autres additifs et/ou matières de charge.

2. Mélange caoutchouc selon la revendication 1, **caractérisé en ce que** le/les caoutchouc(s) nitrile carboxylé(s) sont sélectionnés parmi le groupe constitué du NBR carboxylé, du NBR carboxylé partiellement hydrogéné et du NBR carboxylé totalement hydrogéné ou de mélanges de deux ou plus de deux des membres du groupe.

3. Mélange caoutchouc selon la revendication 1 ou 2, **caractérisé en ce que** le sel métallique de l'acrylate est un diacrylate de zinc ou un diméthacrylate de zinc ou un mélange de ceux-ci.

4. Mélange caoutchouc selon une ou plusieurs des revendications 1 ou 3, **caractérisé en ce que** l'acrylate liquide est du diméthacrylate de butanediol ou du triméthacrylate de triméthylolpropane ou un mélange de ceux-ci.

5. Mélange caoutchouc selon une ou plusieurs des revendications 1 à 4, **caractérisé en ce que** du vinylsilane est utilisé en tant que silane.

6. Mélange caoutchouc selon une ou plusieurs des revendications 1 à 5, **caractérisé en ce que** le mélange contient en outre une matière de charge silicatique, de la suie, de l'oxyde de zinc, de l'oxyde de magnésium ou un mélange de deux ou plus de deux de ces composants.

7. Mélange caoutchouc selon une ou plusieurs des revendications 1 à 6, **caractérisé en ce que** le mélange contient des retardateurs de vulcanisation et/ou des accélérateurs de vulcanisation.

8. Mélange caoutchouc réticulable, contenant un mélange caoutchouc selon une ou plusieurs des revendications 1 à 7.

9. Procédé de préparation d'un mélange selon une ou plusieurs des revendications 1 à 8, **caractérisé en ce que** les composants sont mélangés en un agrégat mixte.

10. Procédé de réticulation d'un mélange selon une ou plusieurs des revendications 1 à 9, **caractérisé en ce qu'**un peroxyde (éventuellement en combinaison avec du peroxyde de zinc) est utilisé en tant que réticulant.

11. Mélange réticulé que l'on peut obtenir par un procédé selon la revendication 10.

12. Mise en oeuvre d'un mélange caoutchouc selon une ou plusieurs des revendications 1 à 8 ou 11 pour la fabrication de corps moulés de tout type.

13. Mise en oeuvre selon la revendication 12 pour la fabrication de garnitures de rouleaux.

14. Corps moulé, pouvant être fabriqué en mettant en oeuvre un mélange caoutchouc selon une ou plusieurs des revendications 1 à 8 ou 11.
